# EUROPEAN PATENT SPECIFICATION

(11) **EP 3 343 867 B1**
(45) Date of publication and mention of the grant of the patent: **05.02.2020**
(21) Application number: 17209170.4
(22) Date of filing: 20.12.2017
(51) Int. Cl.: H04L 29/06

(54) **METHODS AND APPARATUS FOR PROCESSING THREAT METRICS TO DETERMINE A RISK OF LOSS DUE TO THE COMPROMISE OF AN ORGANIZATION ASSET**
VERFAHREN UND VORRICHTUNG ZUR VERARBEITUNG VON BEDROHUNGMETRIKEN UM EIN VERLUSTRISIKO AUFGRUNG DER KOMPROMITTIERUNG EINER ORGANISATIONEINHEIT ZU BESTIMMEN
MÉTHODE ET APPAREIL POUR LA GESTION DE MÉTRIQUES DE MENACE POUR DÉTERMINER LE RISQUE DE PERTE DUE A LA COMPROMISSION D'UNE ENTITÉ DANS UNE ORGANISATION

(30) Priority: 30.12.2016 US 201615395960
(43) Date of publication of application: 04.07.2018
(73) Proprietor: Lookingglass Cyber Solutions, Inc., Baltimore, MD 21224 (US)
(72) Inventor: Thomson, Allan, Pleasanton, CA California 94566 (US); Day, Jamison M., Denver, CO Colorado 80209 (US); Shipley, Aric, Livermore, CA California 94551 (US)
(74) Representative: Cooley (UK) LLP

(56) References cited:
- EP-A2- 1 768 043
- US-A1- 2013 191 919
- US-A1- 2014 137 257
- US-B1- 9 294 498

## Description

### FIELD

One or more methods and apparatus described herein are generally related, for example, to improving the accuracy and data processing effectiveness of cybersecurity technologies.

### BACKGROUND

In some known network systems, threat scores are primarily calculated based on the presence of known threats at a particular system. For example, in some known network systems, threat scores are calculated based on detecting activity at a particular asset, and determining a threat score of that asset based on that detected activity. There are, however, limited means of calculating threat scores for assets when threats are detected at other assets, and when those detected threats may pose a risk to the asset.

Specifically, in some known network systems, when information relating to a detected vulnerability or threat is received by an analyst, modifying the risk associated with a particular threat or vulnerability of an asset can involve a time-intensive process. The information relating to the detected vulnerability or threat may include information about the threat and identify the source of the threat, but may not include information that allows for quick and efficient matching of that information to other assets, to determine the impact the threat or vulnerability may have on those assets. In some known network systems, network administrators therefore process this information manually, so as to determine which assets may be at risk as a result of a detected threat, and a degree to which they may be at risk. Such determinations generally also involve comparing the characteristics of the asset having the detected threat or vulnerability, with the characteristics of each asset that may be at risk, which can also be a time-intensive and resource-intensive process.

Accordingly, a need exists for methods and apparatus that facilitate an automated process of efficiently determining to what extent a detected threat may affect threat scores of other assets of an organization, without a need to manually compare the characteristics of the device where the threat was detected with those of the other assets.
EP 1768043 discloses information system service-level security risk analysis.
US 2013/191919 discloses calculating quantitative asset risk.
US 2014/137257 discloses a system, method and apparatus for assessing a risk of one or more assets within an operational technology infrastructure.

### SUMMARY

In accordance with one aspect of the invention, there is provided an apparatus claim as defined in claim 1. In accordance with another aspect of the invention, there is provided a method claim as defined in claim 12. Optional features are defined in the dependent claims.

### BRIEF DESCRIPTION OF THE DRAWINGS

FIG. 1 is a schematic diagram illustrating a threat processing server, according to an embodiment.
FIG. 2 is a diagram illustrating an influencer graph, according to an embodiment.
FIG. 3 is a diagram illustrating calculating threat score information, according to an embodiment.
FIG. 4 is a data flow diagram illustrating processing asset-agnostic information, according to an embodiment.
FIG. 5 is a logic flow diagram illustrating calculating threat scores, according to an embodiment.
FIG. 6 is a logic flow diagram illustrating processing asset-agnostic information, according to an embodiment.
FIG. 7 is a diagram illustrating influencing threat scores, according to an embodiment.
FIG. 8 is a diagram illustrating threat mitigation actions, according to an embodiment.
FIG. 9 is a diagram illustrating a threat mitigation user interface, according to an embodiment.

### DETAILED DESCRIPTION

In some implementations, information relating to assets (e.g., such as network assets, entities, persons, and/or the like) can be received by apparatus and systems described herein. The information can be used to calculate various threat scores and/or to generate other threat information, and identify source threat, vulnerability, and/or other information relating to the assets (e.g., information indicating that an asset is a source of a threat, vulnerability, and/or the like), or destination threat, vulnerability, and/or other information relating to the assets (e.g., information indicating that an asset may be a potential target of a threat, vulnerability, and/or the like). Apparatus and systems herein can also receive indications of the importance of some portion of the assets associated with a given organization, and can use the indications of importance to determine a priority for calculating threat scores of the various assets. For example, assets with high importance indications may have their threat scores calculated first and/or initially, followed by assets that are connected to and/or associated with those assets. In some implementations, an importance of an asset may not have an effect on an order in which threat scores are calculated (i.e., the importance of an asset may not correlate to a threat score calculation priority of that asset).

In some implementations, threats can include cyber and/or network security threats, natural disaster threats, terrorist threats, physical, social, and/or other threats to personnel and/or other persons related to an organization, facilities, assets, and/or infrastructure associated with an organization, threats to the integrity of products in the supply chain of an organization, financial threats to an organization, and/or other threats to the reputation, brand equity, and/or the like of an organization. Vulnerabilities can include vulnerability in the security of various assets associated with an organization (e.g., including operating system vulnerabilities for network devices in an organization, and/or the like). While methods and apparatus herein generally refer to threats, these methods and apparatus can also be used to process data and assess risks to assets based on vulnerabilities, and/or other such information.

In some implementations, the threat information can be asset-agnostic. For example, an organization can receive an indication that a threat has been detected at, or may be a target for, that organization. The information, however, may not include information linking the information to specific assets within the organization. For example, the information may indicate that a vulnerability in specific software has been detected at a network device, but may not indicate which assets in the organization run that software or may be vulnerable to that risk. Methods and apparatuses herein provide a way of using the information to assess potential threats to the organization's assets, without needing to match specific characteristics of threats with specific assets associated with that organization. Thus, the methods and apparatus herein provide a mechanism for calculating threat scores for an asset within an organization, before and/or without detecting a threat at that particular asset. Said another way, threat scores can be calculated for an asset identified as a potential target of a threat, vulnerability, and/or the like, before the threat, vulnerability, and/or the like affects the asset.

In some implementations, integrating scores for targeted attack risk and asset compromise impact with existing threat risk scores can enable composite scoring for risk of loss, allowing analysts and/or other organization entities to prioritize mitigation and response efforts (e.g., based on predetermined organizational values). Thus, rather than merely responding to particular external threats, analysts and/or other entities can respond to external threats that are impacting assets that have been indicated as being important to the analysts and/or other entities. Further, using apparatus and methods described herein, risk scores can be adapted substantially in real time to changes in information about threat information, element relationships, and element activity with threat sources, without needing to identify specific configurations of assets to determine a relevance between the information and those assets.

Apparatus and methods described herein can also enable aggregate risk scoring for collections of assets, including an entire organization's defined assets (thus allowing scaling the apparatuses and methods described herein to network graphs with millions or billions of elements and relationships). Additionally, as the methods and apparatus herein can operate in parallel, apparatuses and methods herein can use horizontal scaling capabilities of distributed computing clusters to increase the efficiency of information processing. Such processes and apparatuses can be useful in ensuring that risk scores can be updated and/or modified before information has substantially aged and become less significant over time. Further, the systems herein can process dynamic, analyst-generated 'what-if' scenarios, e.g., by spawning minimal copies of the graph that calculate hypothetical situations, and while actively updating the copies of the graph with current information from a 'main' view. In this manner, apparatus and methods herein can more efficiently process predictions about how information may affect various assets associated with a given organization and/or network.

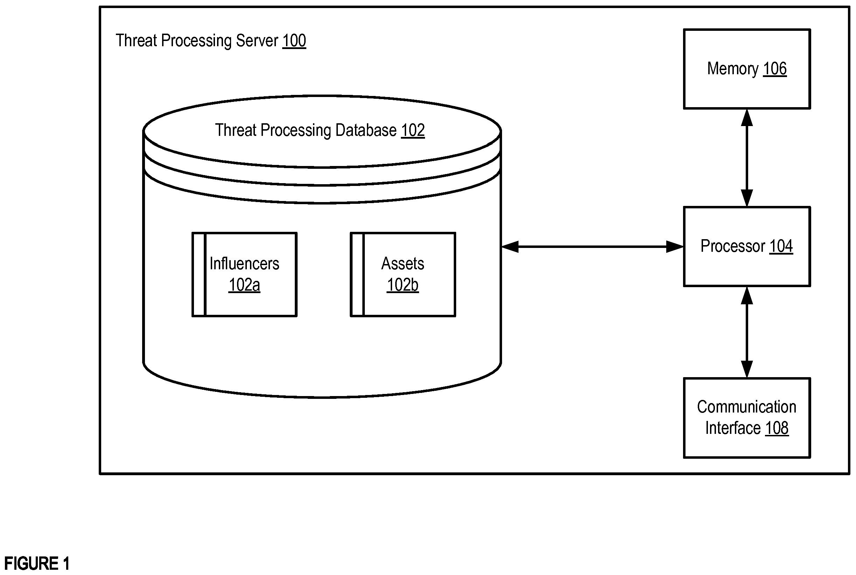

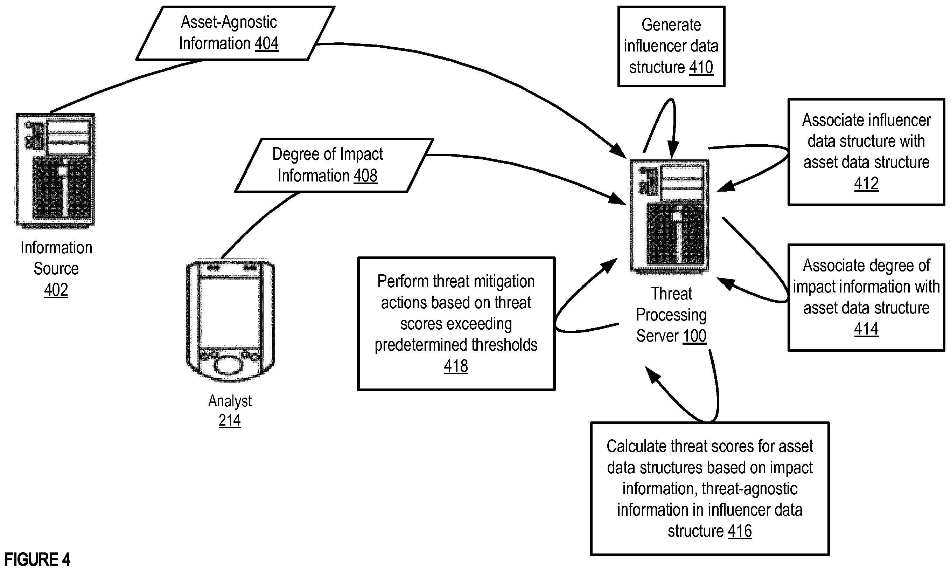

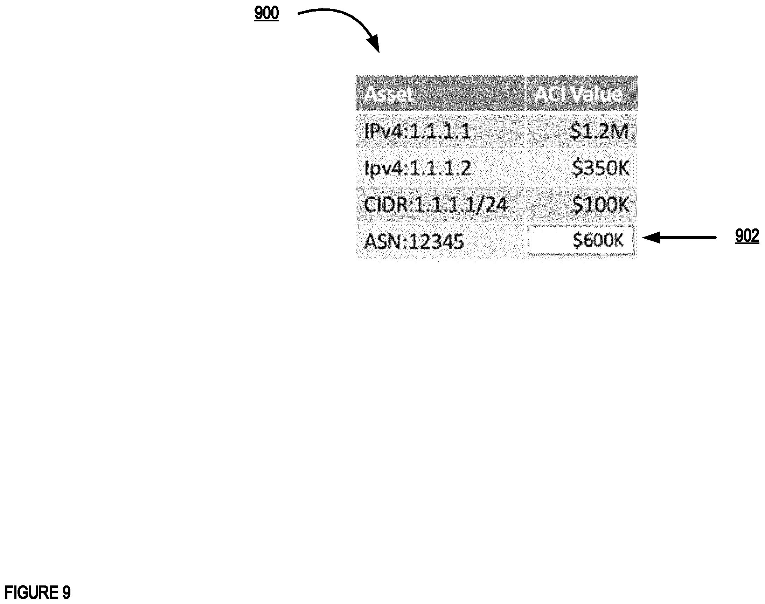

In some implementations, apparatus and systems herein can also host and/or instantiate a graphical user interface such that network administrators and/or other entities can provide input affecting the calculation of threat scores, and/or such that network administrators and/or other entities can view information about assets in one or more organizations. For example, network administrators can access a graphical user interface hosted by apparatus and systems herein using client devices and/or the like, and can view interfaces displaying graphical representations of assets and the relationships between the assets. Network administrators can select the graphical representations of the assets to view additional information about the assets, such as the threat scores of the assets (described in further detail in FIGs. 1-2), a degree of importance assigned to the assets, and/or other information. The network administrator can also edit the degree of importance assigned to an asset by selecting an asset and editing the displayed degree of importance, and/or the like. The network administrator can also perform threat mitigation actions through the graphical user interface. For example, after selecting an asset, the network administrator can also be presented with threat mitigation actions, e.g., such as the ability to modify relationships between the selected asset and other assets associated with the organization, to disable the selected asset, and/or the like. Threat mitigation actions are described in further detail in the discussion of FIGs. 4-6. FIG. 9 illustrates an example interface for inputing threat scores into a graphical user interface.

FIG. 1 is a schematic diagram illustrating a threat processing server **100,** according to an embodiment. For example, in some implementations, a threat processing server **100** can be a system that can receive asset-agnostic intelligence data (also referred to herein as "asset-agnostic data" or "asset-agnostic information") identifying potential threats, vulnerabilities, and/or the like that may affect or be affecting assets associated with an organization and managed by an analyst. An asset can be an entity associated with the organization, such as a network device and/or information associated with a network device (e.g., an internet protocol (IP) address of a network device, a classless inter-domain routing (CIDR) identifier of a network device, an autonomous system, a fully qualified domain name (FQDN) of a network device, a network application instantiated on a network device, an identifier of a network user associated with a network device, or a hardware identifier of a network device), an organization group, an organization employee, and/or the like. An analyst can be an electronic device and/or a similar entity configured to manage associations between assets within an organization, to affect threat score calculations for assets in an organization, to initialize threat mitigation actions in response to threat score calculations, and/or to perform other actions. The threat processing server **100** can include at least one processor **104,** at least one memory **106,** a communication interface **108,** and a threat processing database **102.** The at least one processor **104** can be operatively coupled to each of the at least one memory **106,** the communication interface **108,** and/or the threat processing database **102.** The at least one processor **104** can be any hardware module and/or component configured to receive and process data, and/or to execute code representing executable instructions. In some embodiments, the at least one processor **104** can be a general purpose processor, a Field Programmable Gate Array (FPGA), an Application Specific Integrated Circuit (ASIC), a Digital Signal Processor (DSP), and/or the like.

The at least one memory **106** can be a hardware module and/or component configured to store data accessible by the at least one processor **104,** and/or to store code representing executable instructions for the at least one processor **104.** The memory **106** can be, for example, a random access memory (RAM), a memory buffer, a hard drive, a database, an erasable programmable read-only memory (EPROM), an electrically erasable read-only memory (EEPROM), a read-only memory (ROM) and/or so forth. In some embodiments, the memory **106** stores instructions to cause the processor **104** to execute modules, processes and/or functions associated with the threat processing server **100.** In some implementations, if the threat processing server **100** includes multiple processors **104,** the modules and/or server components can be distributed among and/or executed by the multiple processors **104.** The at least one memory **106** can be configured to store processor-readable instructions that are accessible and executable by the at least one processor **104.** In some implementations, the communication interface **108** can be an interface that facilitates communications between the threat processing server **100** and other devices (e.g., such as compute devices, network devices, communication devices, and/or other electronic devices associated with one or more organizations) operatively coupled to the threat processing server **100.** For example, the communication interface **108** can be a wireless network interface, a wired network interface (e.g., an Ethernet interface), and/or a similar mechanism for communicating with other devices.

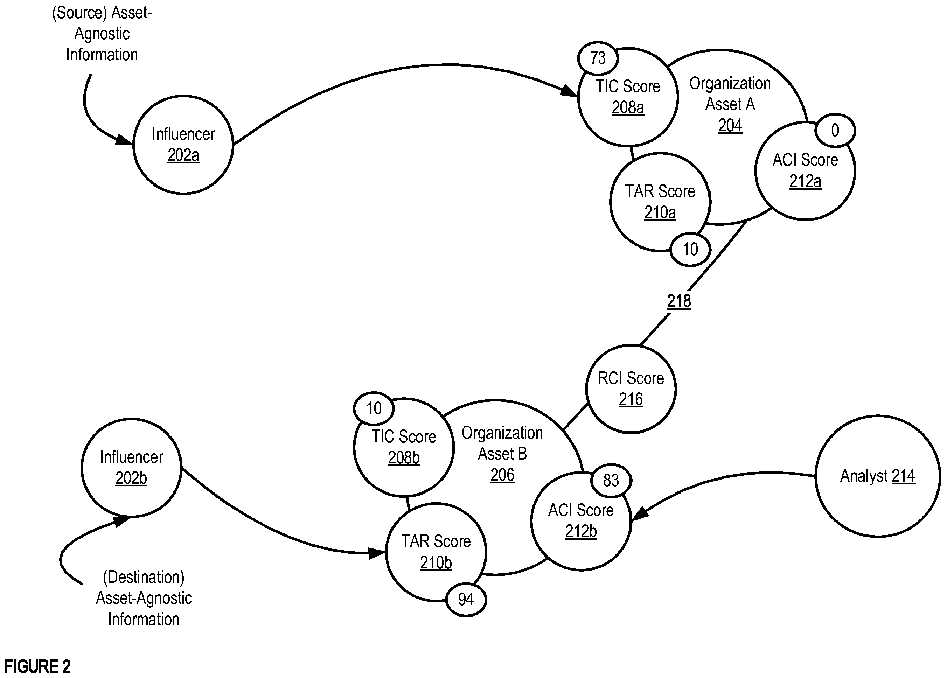

In some implementations, the threat processing server **100** can also include a threat processing database **102.** The threat processing database **102** can include various records relating to information for generating influencer graphs (e.g., graphs representing relationships between assets associated with a particular organization). For example, the threat processing database **102** can include tables such as an influencers table **102a** and an assets table **102b** that store various data structures used by apparatus and systems described herein, for processing and/or performing actions based on information received at the threat processing server **100.** For example, the influencers table **102a** can include records of influencer data structures (also referred to herein as "threat impact data structures") that can be generated based on asset-agnostic information received by the threat processing server **100.** For example, influencer data structure records can include influencer data structure record identifiers, an identifier identifying a source of the asset-agnostic information (e.g., a network identifier, device identifier, personally-identifiable information, and/or other identifier information), an identifier identifying potential destination of the asset-agnostic information, the asset-agnostic information (e.g., including authors, methods, types, dates and/or times identified as relevant to the particular threat, and/or other information about a threat, vulnerability, and/or other information included in the asset-agnostic information), a list of assets (i.e., asset data structure record identifiers) and/or organizations with which the influencer data structure may be associated, and/or the like. In some implementations, influencer data structure records can be generated using processes similar to those described in the discussion of FIGs. 4-6. The assets table **102b** can include records of asset data structures that can represent assets associated with an organization and/or network. For example, the asset data structure records can include asset data structure record identifier, a name of an asset, a location of an asset, an identifier identifying an owner of an asset, an organization with which the asset is associated, a threat indicator confidence (TIC) score of the asset, a target attack risk (TAR) score of the asset, an asset compromise impact (ACI) score of the asset, a risk of loss (RoL) score for the asset, relationships between an asset and other assets represented in asset data structure records in the asset table **102b** (e.g., such as a list of identifiers associated with asset data structure records, data structures such as tuples specifying an identifier associated with a second asset data structure record representing a second asset, and an RCI score of an edge between the asset and the second asset, and/or the like), a relational compromise impact (RCI) score associated with those relationships between assets, a list of identifiers associated with influencer data structure records representing influencers associated with the asset, and/or the like. The various scores associated with assets are described in further detail in FIGs. 2-6. In some implementations, asset data structure records can be generated using processes similar to those described in the discussion of FIGs. 4-6.

FIG. 2 is a diagram illustrating an example of an influencer graph. For example, in some implementations, asset-agnostic information can be stored in the threat processing database **102** as influencer data structures **202a** and **202b.** As an example, influencer data structure **202a** can include source asset-agnostic information (e.g., asset-agnostic information that indicates that one or more assets are sources of a potential threat, vulnerability, and/or the like), and influencer data structure **202b** can include destination asset-agnostic information (e.g., asset-agnostic information that indicates that one or more assets may be destinations of a potential threat, vulnerability, and/or the like). In some implementations, influencer data structure **202a** can be used to modify and/or calculate a TIC score of an asset. In some implementations, TIC scores can be scores indicating a likelihood that a particular asset is and/or will be a source of a threat, vulnerability, and/or the like within an organization. As an example, influencer data structure **202a** can be used by the at least one processor **104** to modify the TIC score **208a** of organization asset A **204.** A higher TIC score can indicate a higher likelihood of an asset being a source of a threat, while a lower TIC score can indicate a lower likelihood of an asset being a source of a threat. In some implementations, a predicted degree of risk that an asset may cause if it is the source of a risk may also be factored into the calculation of a TIC score (e.g., if an asset will cause a higher risk to an organization as a whole if that asset is the source of a threat, the TIC score of that asset may increase, and vice-versa).

In some implementations, influencer data structure **202b** can be used to modify and/or calculate a TAR score of an asset. In some implementations, TAR scores can be scores indicating a likelihood that a particular asset is and/or will be a destination (e.g., a target) of a threat, vulnerability, and/or the like within an organization. A higher TAR score can indicate a higher likelihood of an asset being a target of a threat, while a lower TAR score can indicate a lower likelihood of an asset being a target of a threat. In some implementations, a predicted degree of risk that an asset may cause if it is the destination of a risk may also be factored into the calculation of a TAR score (e.g., if an asset will cause a higher risk to an organization as a whole if that asset is the target of a threat, the TAR score of that asset may increase, and vice-versa). As an example, influencer data structure **202b** can be used by the at least one processor **104** to modify the TAR score **210b** of organization asset B **206.**

Each of organization asset A **204** and organization asset B **206** can also have an ACI score **212a** and **214b,** respectively. An ACI score can be an analyst-assigned value and/or a server-assigned value indicating an importance of an asset within a particular organization. For example, an analyst **214** and/or the at least one processor **104** of the threat processing server **100** can determine, in addition to the TIC and/or TAR scores, an importance and/or a degree of influence organization asset B **206** has on other assets associated with an organization, and can assign an ACI score **212b** to organization asset B **206.** ACI scores can be based on a value an analyst **214** and/or the threat processing server **100** places on a particular asset, and/or the like (e.g., based on the asset's financial value to an organization, based on an asset's relationships with other important assets within an organization, and/or the like). Assets can be associated with other assets associated with an organization. In this manner, the at least one processor **104** of the threat processing server **100** can generate an influence graph, where influencer data structures and asset data structures can be nodes of the influence graph, and relationships and/or connections between asset data structures can be edges of the influence graph. Each edge **218** can also be associated with a relational compromise impact (RCI) score **216** indicating a degree to which one asset (e.g., organization asset A **204**) may impact threat scores of another asset (e.g., organization asset B **206**), or vice-versa, by nature of their being related to one another. For example, if one asset is a person, and another asset is a network device, the two assets may be associated with each other, and an RCI score may be calculated to quantify the degree to which threat scores (e.g., TIC, TAR, ACI, and/or other threat scores) of the person asset may affect the threat scores of the network device, or vice-versa. Said another way, an RCI score can be a weight that can affect how threat scores of one asset may influence the calculation of threat scores of another asset. In some implementations, if there is no edge between two assets, the RCI score can have a value of '0' (e.g., to indicate that the threat scores of one asset should not have a direct effect on the threat scores of another asset).

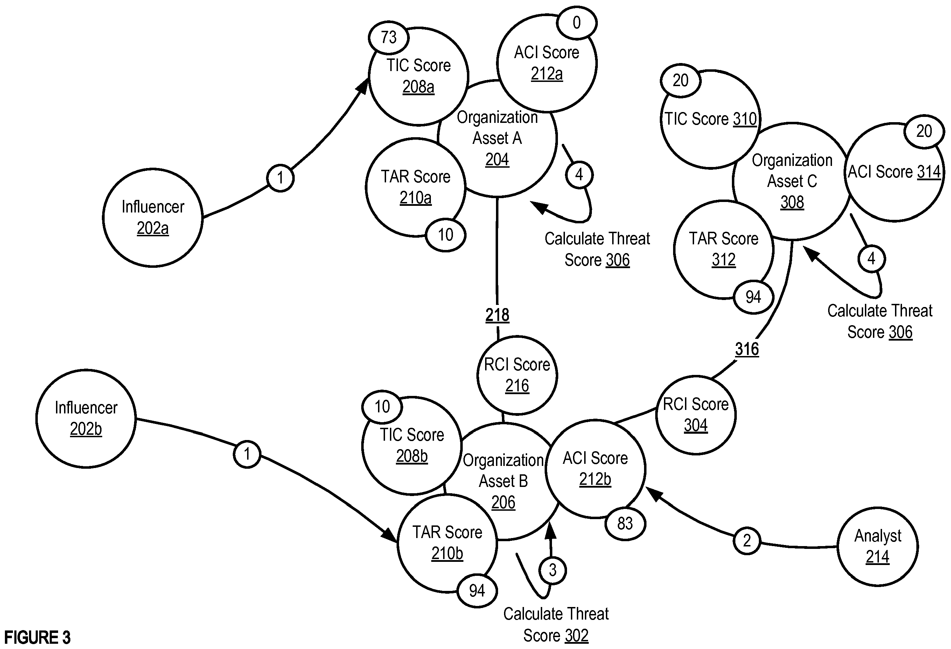

FIG. 3 is a diagram illustrating an example of calculating threat score information. For example, in some implementations, to calculate threat scores, influencer data structures (e.g., such as influencer data structures **202a** and **202b**) can first be associated with asset data structures (e.g., such as organization asset data structures **204** and **206**). Influencer data structures that include source asset-agnostic data (e.g., such as influencer data structure **202a**) can be used to update TIC scores of asset data structures with which those influencer data structures are associated. Similarly, influencer data structures that include target asset-agnostic data (e.g., such as influencer data structure **202b**) can be used to update TAR scores of asset data structures with which those influencer data structures are associated. An analyst **214** can also assign and/or modify an ACI score of one or more assets data structures. For example, referring to FIG. 9, in some implementations, the analyst **214** can enter score information into a user interface **900.** As one example, the ACI score can indicate a financial value of a particular asset "ASN: 12345," and the user can input an ACI value of $600,000 for that asset within a text box **902** of the user interface **900.** The at least one processor **104** of the threat processing server **100** can decide which asset data structures to update initially within an influence graph, based in part on the ACI score of each asset data structure. For example, the at least one processor **104** of the threat processing server **100** can determine which asset data structure has a high ACI score (e.g., an ACI score above a predetermined threshold, a highest ACI score, and/or the like). The at least one processor **104** of the threat processing server **100** can then update threat scores (e.g., such as the TIC and/or TAR scores) of those asset data structures, before updating the threat scores of other asset data structures. Additionally, the at least one processor **104** of the threat processing server **100** can update RCI scores for edges between asset data structures, such that an asset with a high ACI score may have a larger relational impact on asset data structures with which that asset is associated.

As a non-limiting example, analyst **214** can update ACI score **212b** of organization asset B **206.** Organization asset B **206** can be associated with organization assets A **204** and C **308.** Because organization asset B **206** has a higher ACI **212b** score than organization assets A **204** and C 308 (e.g., 83 versus 0 and 20, respectively), the at least one processor 104 of the threat processing server **100** can, at **302,** update the TIC score **208b** and TAR score **210b** of organization asset B **206,** before updating those of organization assets A **204** and C **308.** For example, based on the information in influencer **202b,** and/or information from organization assets A **204,** C **308,** and/or other organization assets with which organization asset B **206** is associated, the at least one processor **104** can update the TAR score **210b.** The at least one processor **104** can also update RCI scores **216** and **304,** based on connection **218** between organization asset B **206** and organization asset A **204,** and connection **316** between organization asset B **206** and organization asset C **308,** respectively. For example, the RCI scores **216** and **304** can be updated such that the ACI score 212b of organization asset B 206 has a higher impact on the calculation of the ACI score 212a of organization asset A 204, and also have a higher impact on the calculation of the ACI score 314 of organization asset C **308.** The at least one processor **104** can then calculate and/or update, at **306,** the threat scores of organization assets A **204** and C **308** (e.g., TIC score **208b** and TAR score **210b,** and TIC score **310** and TAR score **312,** respectively), e.g., based on influencer data structures associated with those organization assets, based on the threat scores of organization asset B **206,** and/or based on the RCI scores associated with edges of those organization assets. In this manner, the at least one processor **104** can prioritize the calculation of threat scores for asset data structures based on the respective ACI scores of those asset data structures. In other implementations, threat scores can be calculated independently of the ACI scores of the asset data structures (i.e., each threat score can be calculated in parallel and/or can otherwise be calculated without the use of a priority determined based on the ACI scores).

In this non-limiting example, because there is no edge between organization asset A **204** and organization asset C **308,** the threat scores of organization asset A **204** may not directly affect the threat scores of organization asset C **308,** or vice-versa. Said another way, the threat scores of organization asset A **204** can be calculated based on the threat scores of organization asset B **206** and the RCI score of the edge between organization asset A **204** and organization asset B **206.** An RCI score for organization asset A **204** and organization asset C **308** (if the at least one processor stores an RCI score for organization asset A **204** and organization asset C **308**) may be '0,' so as to indicate a lack of a relationship between the two organization assets, and indicating that the threat scores of organization A **204** may not be calculated based on the threat scores of organization asset C **308.**

In some implementations, after the TIC, TAR, ACI, and/or RCI scores for a given asset have been calculated, the at least one processor **104** can calculate an overall risk of loss (RoL) score for the asset. The overall RoL score can indicate a composite risk that an asset will cause and/or be threatened by a detected risk. An analyst can use the RoL score to determine an overall risk to a particular asset, and can also perform threat mitigation actions based on that overall risk. In this manner, the at least one processor **104** can calculate the RoL score for the asset before and/or without detecting that the risk has actually affected that particular asset. In some implementations, the at least one processor **104** can also calculate an organization RoL score, representing an overall risk of loss for an entire organization based on the RoL scores of assets associated with the organization. For example, the organization RoL score can be an average of the RoL scores of assets associated with the organization, a weighted average of the RoL scores of the assets (e.g., where the RoL scores of the assets are weighted based on their ACI scores, and/or the like), an average of the RoL scores of assets having ACI scores that exceed a predetermined threshold, a highest RoL score of the assets associated with the organization, and/or the like.

FIG. 4 is a data flow diagram illustrating processing asset-agnostic information, according to an embodiment. For example, in some implementations, an information source **402** can send asset-agnostic information **404** to the threat processing server **100.** The information source **402** can be an external source (e.g., such as a threat information aggregation device, an asset associated with a different and/or external organization, and/or a similar electronic device operatively coupled to the threat processing server **100**) having information about a potential threat to and/or within assets associated with an organization, an asset associated with the organization having similar information, and/or the like. The asset-agnostic information can include information about threats, vulnerabilities, and/or other intelligence information detected at the information source **402** and/or detected at a different device and/or asset that is external and/or internal to an organization, that can be useful for calculating and/or updating threat information for various assets associated with the organization, without including information that associates those threats, vulnerabilities, and/or the like with a particular asset and/or set of assets of the organization. For example, asset-agnostic information can include indications of disparaging remarks about service on blogs and/or social media, botnet requests to command and/or control nodes in a network, 0-result port scans on a computer within an organization, terrorist communications, anti-virus protection information and/or anti-virus logs, unusual behavior patterns of assets associated or not associated with the organization, indications of high and/or unusual network flow with and/or from assets with high TIC scores, indications that facility surveillance activity was detected, indications that an excessive number of failed logins have occurred with respect to one or more assets associated with or not associated with the organization, severe weather predictions, indications of successful and/or attempted Distributed Denial of Service (DDoS) activity, indications of stolen identity, network administrator insights, attempted connections to an asset, and/or other information.

In some implementations, an analyst **214** can also provide information indicating a degree of impact **408** for at least one asset of an organization, to the threat processing server **100.** The degree of impact **408** can be an ACI score for the at least one asset, or can be a value that can be used by the at least one processor **104** of the threat processing server **100** to calculate and/or update the ACI score of the at least one asset. Using the asset-agnostic information, the threat processing server **100** can generate at least one influencer data structure. For example, the threat processing server **100** (e.g., via the at least one processor) can, at **410,** generate an influencer data structure that, when associated with an asset, can affect a TIC score or a TAR score of that asset. The at least one processor **104** can, at **412,** associate the influencer data structure with an asset data structure stored in the threat processing database **102** of the threat processing server **100** (e.g., by storing an identifier of the influencer data structure within the asset data structure, and/or vice-versa). The at least one processor **104** can also, at **414,** associate the degree of impact information sent from the analyst **214** with the asset data structure (e.g., by storing the ACI score included in, and/or generated as a result of, the degree of impact information sent from the analyst **214,** in the asset data structure).

The at least one processor **104** can then calculate, at **416,** threat scores for the asset data structure based on the degree of impact information (e.g., the ACI score) and the threat-agnostic information in the influencer data structure. For example, the at least one processor **104** can calculate and/or update TIC and/or TAR scores associated with the asset based on the ACI score and the influencer data structure. The at least one processor **104** can also calculate and/or update threat scores for other assets associated with the asset, and/or can generally calculate and/or update threat scores for other assets associated with an organization. In some implementations, the ACI scores of each asset can affect a priority for each asset data structure (e.g., specifying an order in which the threat scores of each asset data structure can be updated). The at least one processor **104** can, at **418,** perform threat mitigation actions when at least one of the threat scores exceeds a predetermined threshold. For example, the at least one processor **104** can modify and/or remove relationships between assets, add, remove, and/or disable assets from an organization, and/or perform other threat mitigation actions as a result of one or more threat scores of one or more assets exceeds a predetermined threshold.

For example, to modify relationships between a first asset and a second asset, the at least one processor **104** can modify an asset data structure record for the first asset in the threat processing database, so as to modify the list of asset data structure record identifiers and/or tuple data structures stored in the asset data structure record that represents a list of assets associated with the first asset. The at least one processor **104** can, for example, remove an asset data structure record identifier and/or tuple data structure representing the second asset, from the list stored in the first asset data structure record, if the at least one processor **104** is removing the relationship between the first asset and the second asset. The at least one processor **104** can also similarly remove an asset data structure record identifier and/or tuple data structure representing the first asset, from a list stored in an asset data structure record associated with the second asset, to completely remove a relationship between the first asset and the second asset. The at least one processor **104** can similarly add asset data structure record identifiers to a list stored in an asset data structure record to add a relationship between a first asset and a second asset in asset data structures associated with the first asset and the second asset. To disable an asset from an organization, the at least one processor **104** can, as one example, remove relationships between an asset being disabled and the assets with which that asset has relationships. The at least one processor **104** can also send a signal to the asset to notify the asset that it has been disabled.

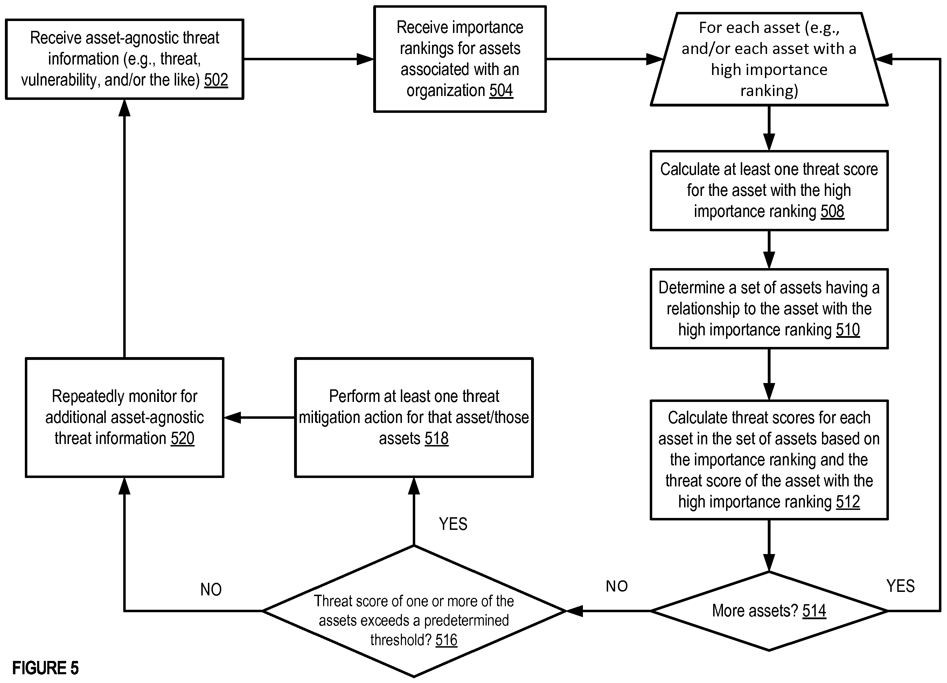

FIG. 5 is a logic flow diagram illustrating calculating threat scores, according to an embodiment. For example, in some implementations, at **502,** a device (e.g., such as the at least one processor **104** of the threat processing server **100**) can receive asset-agnostic threat information (e.g., information relating to a threat, vulnerability, and/or the like that may affect unidentified assets within an organization) from an information source such as an external data source, another asset associated with the organization, and/or the like. The at least one processor **104** can also, at **504,** receive importance rankings for assets associated with an organization. For example, the at least one processor **104** can receive, from analysts, network administrators, asset owners, and/or the like, an indication of how important an asset is to an organization, and/or a priority ranking for the asset. The at least one processor **104** can, at **508** and for each asset with a high importance ranking, calculate at least one threat score for that asset. The at least one threat score may be the TIC, TAR, and/or RCI score associated with the asset, and may be calculated based on the asset-agnostic information received by the at least one processor **104** at **502.** The at least one threat score may also be the RoL score for the asset, based on the calculated and/or updated TIC, TAR, ACI, and/or RCI scores of that asset. The at least one processor **104** can, at **510,** determine a set of assets having a relationship to that asset and can, at **512,** calculate updated threat scores for each asset in that set of assets, based on the updated threat scores of the initial asset. Said another way, after threat scores for a high-importance asset have been calculated and/or updated, the at least one processor **104** can then update threat scores for each asset having a relationship to that asset. In this manner, assets of high importance can be updated first, followed by other assets associated with an organization.

The at least one processor **104** can, at **514,** determine whether or not there are additional assets with high ACI scores to process, and can continue to calculate scores in a similar manner. In other implementations, the at least one processor **104** can also calculate threat scores of each asset associated with an organization and with a high ACI score, and then calculate threat scores for a portion and/or each of the remaining assets associated with the same organization. In this manner, the at least one processor **104** can either update threat scores for those assets with relationships to high-importance assets, or can update threat scores for each asset associated with an organization.

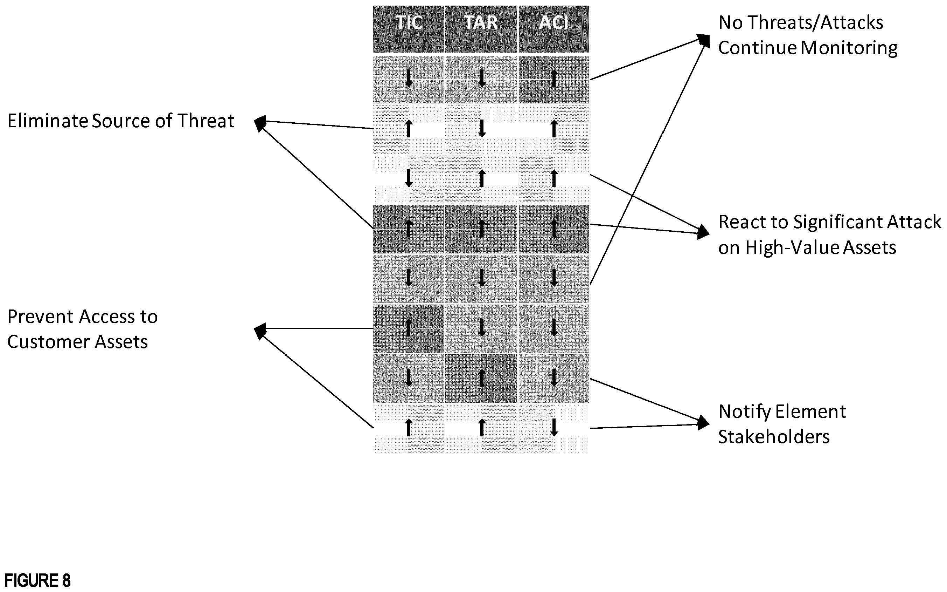

When threat scores for each high-importance asset have been calculated, the at least one processor **104** can, at **516,** determine whether or not threat scores of one or more assets associated with the organization exceed a predetermined threshold. Specifically, the at least one processor **104** can determine whether or not the TIC, TAR, RCI, and/or RoL score of an asset of an organization exceeds a predetermined threshold. In some implementations, each type of threat score may have a different threshold (e.g., the at least one processor **104** can determine whether or not the TIC score exceeds a first threshold, whether or not the TAR score exceeds a second threshold, whether or not the RoL score exceeds a third threshold, and/or the like). If a threat score of an asset exceeds a predetermined threshold, the at least one processor **104** can, at **518,** perform at least one threat mitigation action for that asset (e.g., described in more detail in the discussion of FIG. 8). After the threat mitigation action has been performed, or if the threat scores of the assets associated with the organization do not exceed predetermined thresholds, the at least one processor **104** can, at **520,** continue to monitor for additional asset-agnostic information, and can repeat the process of processing the asset-agnostic information, updating threat scores, and determining whether or not the threat scores exceed predetermined thresholds, so as to perform threat mitigation actions when the threat scores exceed these thresholds. In some implementations, different forms of threat mitigation can be performed depending on which threat scores exceed the predetermined thresholds.

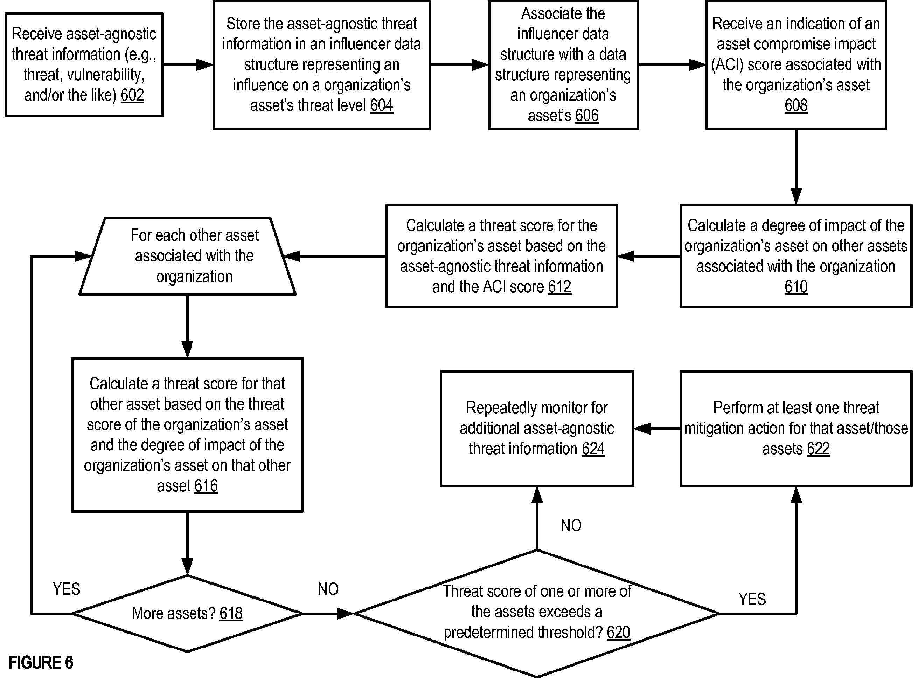

FIG. 6 is a logic flow diagram illustrating processing asset-agnostic information, according to an embodiment. For example, in some implementations, the at least one processor **104** can, at **602,** receive asset-agnostic information (e.g., from another asset, an external source, and/or the like), in a similar manner as at **502** of FIG. 5. The at least one processor **104** can, at **604,** store the asset-agnostic information in an influencer data structure that can represent an influence on an organization's asset's threat level, and/or the like. The influencer data structure can, at **606,** be associated with an asset data structure that represents an asset associated with an organization. Associating the influencer data structure with the asset data structure can allow the at least one processor **104** to update and/or affect the threat scores of the asset represented by the asset data structure.

The at least one processor **104** can also, at **608,** receive an indication of an ACI score associated with the organization's asset, e.g., based on a degree of impact determined by an analyst associated with an organization. The at least one processor **104** can, at **610,** also calculate a degree of impact of the asset on other assets associated with the organization. For example, the at least one processor **104** can use the ACI score associated with the asset to determine a degree to which the threat scores of that asset may affect the threat scores of other assets associated with the organization. This degree of impact can also be referred to as the RCI scores of the edges between the asset data structure and other asset data structures. The at least one processor **104** can, at **612,** calculate a threat score for the asset based on the asset-agnostic information and the ACI score. Specifically, the at least one processor **104** can calculate TIC and/or TAR scores based on the information included in the influencer data structures associated with the asset, and can calculate a RoL score for the asset based on the TIC and/or TAR scores and the ACI score.

For each other asset associated with the organization (e.g., each asset other than the asset for which the threat scores have been calculated), the at least one processor **104** can, at **616,** calculate threat scores for that other asset, e.g., based on the calculated threat scores of the organization's asset, and the RCI score for the edge between that asset and the organization's asset. The at least one processor **104** can, at **618,** continue to calculate and/or update threat scores for the other assets. The at least one processor **104** can, at **620,** determine whether or not one or more threat scores of one of the assets associated with the organization exceeds a predetermined threshold (e.g., similar to the process described at **516** in the discussion of FIG. 5). If a threat score does exceed the predetermined threshold, the at least one processor **104** can, at **622,** perform at least one threat mitigation action for the asset. If the threat scores of the assets associated with the organization have not exceeded predetermined thresholds, or if the at least one threat mitigation action has been performed, the at least one processor **104** can, at **624,** continue to repeatedly monitor for additional asset-agnostic information, so as to continue to perform threat mitigation actions when threat scores exceed predetermined thresholds.

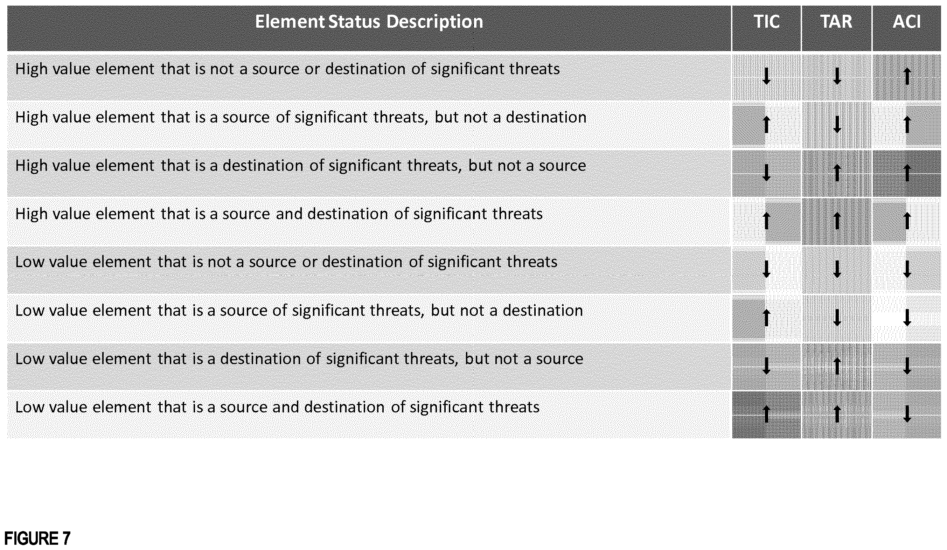

FIG. 7 is a diagram illustrating influencing threat scores, according to an embodiment. For example, in some implementations, various factors can affect the scores of an asset data structure in numerous ways. As an example, in some implementations, if an asset is of high importance but is not likely to be a source or a target of a threat (e.g., is not associated with new influencer data structures), the ACI score of that asset can be high, and the TIC and TAR scores of that asset can be low. As another example, if an asset is of high importance to an organization, and is a potential source of threats in an organization (e.g., is associated with influencer data structures that include source asset-agnostic information), but is not a potential target of threats in an organization (e.g., is not associated with influencer data structures that include destination asset-agnostic information), the asset's ACI score can be high, and the asset's TIC score can be high, but the asset's TAR score may be low. As another example, if an asset is of high importance to an organization, and is a potential target of threats in an organization (e.g., is associated with influencer data structures that include destination asset-agnostic information), but is not a potential source of threats in an organization (e.g., is not associated with influencer data structures that include source asset-agnostic information), the asset's ACI score can be high, and the asset's TAR score can be high, but the asset's TIC score may be low. As another example, if an asset is of high importance to an organization, and is both a potential source of threats in an organization and a potential target of threats in an organization, the asset's ACI, TIC, and TAR scores can be high.

As another example, if an asset is of low importance to an organization, and is not a potential source of threats in an organization, or a potential target of threats in an organization, the asset's ACI, TIC, and TAR scores can be low. As another example, if an asset is of low importance to an organization, is not a potential target of threats in an organization, but is a potential source of threats in an organization, the ACI and TAR scores of the asset can be low, but the TIC score of the asset can be high. Additionally, as another example, if an asset is of low importance to an organization, is a potential target of threats in an organization, but is not a potential source of threats in an organization, the ACI and TIC scores of the asset can be low, but the TAR score of the asset can be high. Finally, as another example, if an asset is of low importance to an organization, but is both a potential source of threats in an organization and a potential target of threats in an organization, the asset's ACI score can be low, but the asset's TIC, and TAR scores can be high. In this manner, various associations between influencer data structures and assets, and/or analyst-provided information for ACI scores, can affect how various threat scores for each asset can be calculated and/or modified.

FIG. 8 is a diagram illustrating examples of threat mitigation actions. For example, in some implementations, depending on the threat scores of an asset and their relative values, the at least one processor **104** of the threat processing server **100** can perform, instruct, and/or trigger different threat mitigation actions. For example, in some implementations, when both the TAR and TIC score of a given asset are low (e.g., regardless of whether or not the ACI score of that asset is high or low), the at least one processor **104** of the threat processing server **100** can determine that there are no imminent threats and/or attacks to monitor, and can continue to monitor for additional information that may indicate that a threat may be affect a given organization. When both an ACI score and a TIC score of an asset are high, the at least one processor **104** of the threat processing server **100** can determine that the asset is a potential threat source that may affect other important assets in the organization, and can take steps to eliminate the source of the threat (e.g., by disabling and/or quarantining the asset until the nature of the threat can be identified and until specific threat remediation measures for that asset can be taken, and/or the like). When the TIC score of the asset is high, but the ACI score of the asset is low, the at least one processor **104** of the threat processing server **100** can determine that the asset is a potential threat source, but that the asset may not be important enough to warrant significant remedial measures. Thus, for example, the at least one processor **104** of the threat processing server **100** can prevent access to the asset by other assets within an organization (e.g., can prevent users and/or network devices within an organization from accessing the asset).

Further, when both the TAR score and the ACI of an asset are high, the at least one processor **104** of the threat processing server **100** can determine that the asset is a target of a potential threat and can take preventative measures to protect the asset (e.g., can add additional safeguards to protect the asset, can ensure that updates to threat prevention software and/or the like have been made, and/or perform other measures to specifically protect that asset). Finally, when the TAR score of an asset is high, but the ACI score of the asset is low, the at least one processor **104** of the threat processing server **100** can determine that the asset is a potential target of a threat, but that it is not necessary to perform significant actions to protect the asset. Thus, for example, the at least one processor **104** of the threat processing server **100** can send messages to users and/or owners of the asset to warn them that the asset is at risk of a threat, but may not perform other steps to mitigate dangers associated with the threat.

While systems and methods herein describe processing intelligence data in a network, it is understood that systems and methods herein can be used to process various types of data that can change and/or be updated over time. Additionally, it is intended that the systems and methods described herein can be performed by software (stored in memory and/or executed on hardware), hardware, or a combination thereof. Hardware modules may include, for example, a general-purpose processor, a field programmable gate array (FPGA), and/or an application specific integrated circuit (ASIC). Software modules (executed on hardware) can be expressed in a variety of software languages (e.g., computer code), including Unix utilities, C, C++, Java™, Ruby, SQL, SAS®, the R programming language/software environment, Visual Basic™, and other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. Additional examples of computer code include, but are not limited to, control signals, encrypted code, and compressed code. Each of the devices described herein can include one or more processors as described above.

Some embodiments described herein relate to devices with a non-transitory computer-readable medium (also can be referred to as a non-transitory processor-readable medium or memory) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

## Claims

1. An apparatus (100), comprising:
a memory (106); and
a processor (104) operatively coupled to the memory,
the processor configured to receive information about asset-agnostic threat information (202) from a source (102),
the processor configured to calculate, substantially in parallel, each threat score from a plurality of threat scores for a first organization asset (204) based on the information about the asset-agnostic threat information, the plurality of threat scores for the first organization asset including 1) a threat source score (208) and 2) a threat destination score (210), the threat source score representing a likelihood that the first organization asset will be a source of a threat, the threat destination score representing a likelihood that the first organization asset will be a destination of a threat, the threat destination score for the first organization asset being different from the threat source score for the first organization asset,
the processor configured to calculate a plurality of threat scores for a second organization asset (206) based on 1) a relationship (218) between the first organization asset and the second organization asset, and 2) an indication of the importance (212) of the first organization asset, the plurality of threat scores for the second organization asset including a threat source score and a threat destination score for the second organization asset,
the processor configured to perform threat mitigation for the first organization asset when a threat score from the plurality of threat scores for the first organization asset exceeds a predetermined threshold, the processor configured to perform threat mitigation for the second organization asset when a threat score from the plurality of threat scores for the second organization asset exceeds the predetermined threshold.

2. The apparatus of claim 1, wherein the processor is further configured to:
generate a threat impact data structure based on the information about the asset-agnostic threat information, and
associate the threat impact data structure with the first organization asset.

3. The apparatus of claim 1, wherein the plurality of threat scores of the first organization asset is calculated before a threat has been detected at the first organization asset.

4. The apparatus of claim 1, wherein the threat score from the plurality of threat scores of the first organization asset exceeds the predetermined threshold when the indication of the importance of the first organization asset exceeds the predetermined threshold.

5. The apparatus of claim 1, wherein the plurality of threat scores of the first organization asset is further calculated based on at least one of: an indication of an attempted connection to the first organization asset by an unapproved asset; and an indication of an attempted connection to the second organization asset by an unapproved asset.

6. The apparatus of claim 1, wherein:
the asset-agnostic threat information includes an indication of an intended target of a threat risk; and
the plurality of threat scores of the first organization asset is further calculated based on an indication of an origin of the threat risk.

7. The apparatus of claim 1, wherein:
the first organization asset and the second organization asset are part of a plurality of organization assets,
the first plurality of threat scores, the second plurality of threat scores, and threat scores associated with each remaining organization asset from the plurality of organization assets are displayed in a graphical user interface so as to render a graphical representation of an overall threat risk of an organization based on the threat scores associated with each organization asset from the plurality of organization assets,
selection of a graphical representation of the first organization asset causes the graphical user interface to render 1) the first plurality of threat scores, 2) a third plurality of threat scores calculated based on an indication that a third organization asset related to the first organization asset is an origin of a threat risk, and 3) an asset compromise impact, ACI, score representing the indication of an importance of the first organization asset, and
the graphical user interface is configured to receive a request to perform a threat mitigation action in response to rendering the first plurality of threat scores, the third plurality of threat scores, and the ACI score.

8. The apparatus of claim 1, the processor further configured to:
associate the asset-agnostic threat information with one of the first organization asset or the second organization asset,
receive an asset compromise impact, ACI, score from a network administrator associated with the one of the first organization asset or the second organization asset, one of the importance of the first organization asset or an importance of the second organization asset comprising the ACI score,
calculate an impact of the one of the first organization asset or the second organization asset on each remaining organization asset from a plurality of organization assets,
calculate one of the plurality of threat scores for the first organization asset or the plurality of threat scores for the second organization asset based on the asset-agnostic threat information and the ACI score,
calculate threat scores for each remaining organization asset from the plurality of organization assets based on 1) the plurality of threat scores for one of the first organization asset or the second organization asset and 2) based on the impact of the one of the first organization asset or the second organization asset, and
perform threat mitigation for each remaining organization asset from the plurality of organization assets when the threat score thereof exceeds the predetermined threshold.

9. The apparatus of claim 8, the processor further configured to:
generate a threat impact data structure based on the indication of the asset-agnostic threat information, and
associate the threat impact data structure with the one of the first organization asset or the second organization asset.

10. The apparatus of claim 8, wherein the plurality of threat scores for the one of the first organization asset or the second organization asset is calculated before determining that the one of the first organization asset or the second organization asset includes the asset-agnostic threat information.

11. The apparatus of claim 8, wherein the plurality of threat scores for the one of the first organization asset or the second organization asset is further calculated based on a relational compromise impact, RCI, score calculated based on the ACI score of the one of the first organization asset or the second organization asset, and an ACI score of each remaining organization asset from the plurality of organization assets associated with the one of the first organization asset or the second organization asset.

12. A method, comprising:
receiving, at a processor (104) and from a source (102), information about asset-agnostic threat information (202);
receiving, at the processor, an indication of an importance (212) of a first organizational asset (204);
calculating, substantially in parallel and via the processor, a plurality of threat scores for the first organizational asset based on 1) the information about the asset-agnostic threat information and 2) the indication of the importance of the first organizational asset, the plurality of threat scores for the first organization asset including 1) a threat source score (208) and 2) a threat destination score (210), the threat source score representing a likelihood that the first organization asset will be a source of a threat, the threat destination score representing a likelihood that the first organization asset will be a destination of a threat, the threat destination score for the first organization asset being different from the threat source score for the first organization asset;
calculating, via the processor, a plurality of threat scores of a second organizational asset (206) associated with the first organizational asset, based 1) on a relationship (218) between the first organizational asset and the second organizational asset, and 2) the indication of the importance of the first organizational asset, the plurality of threat scores for the second organization asset including a threat source score and a threat destination score for the second organization asset;
performing, via the processor, threat mitigation for the first organizational asset when a threat score from the plurality of threat scores for the first organizational asset exceeds a predetermined threshold; and
performing, via the processor, threat mitigation for the second organizational asset when a threat score from the plurality of threat scores for the second organizational asset exceeds the predetermined threshold.

13. The method of claim 12, wherein the indication of the importance of the first organizational asset is an asset compromise impact, ACI, score configured by a network administrator.

14. The method of claim 12, wherein the first organizational asset is a network asset, the network asset being one of an internet protocol, IP, address of a network device, a classless inter-domain routing, CIDR, identifier of a network device, an autonomous system number, ASN, of a plurality of network devices, a fully qualified domain name, FQDN, of a network device, a network application instantiated on a network device, an identifier of a network user associated with a network device, or a hardware identifier of a network device.

15. The method of claim 12, wherein the plurality of threat scores of the second organizational asset is further calculated based on a relational compromise impact, RCI, score calculated based on an association between the first organizational asset and the second organizational asset and based on the indication of the importance of the first organizational asset.

## Patentansprüche

1. Vorrichtung (100), umfassend:
einen Speicher (106) und;
einen Prozessor (104), der funktionsfähig an den Speicher gekoppelt ist,
wobei der Prozessor dazu konfiguriert ist, Informationen zu anlagegutagnostischen Bedrohungsinformationen (202) von einer Quelle (102) zu empfangen,
wobei der Prozessor dazu konfiguriert ist, jede Bedrohungsbewertung von einer Vielzahl von Bedrohungsbewertungen für ein erstes Organisationsanlagegut (204) auf der Basis der Informationen zu den anlagegutagnostischen Bedrohungsinformationen im Wesentlichen parallel zu berechnen, wobei die Vielzahl von Bedrohungsbewertungen für das erste Organisationsanlagegut 1) eine Bedrohungsquellenbewertung (208) und 2) eine Bedrohungszielbewertung (210) beinhaltet, wobei die Bedrohungsquellenbewertung eine Wahrscheinlichkeit darstellt, dass das erste Organisationsanlagegut eine Quelle einer Bedrohung sein wird, wobei die Bedrohungszielbewertung eine Wahrscheinlichkeit darstellt, dass das erste Organisationsanlagegut ein Ziel einer Bedrohung sein wird, wobei die Bedrohungszielbewertung für das erste Organisationsanlagegut sich von der Bedrohungsquellenbewertung für das erste Organisationsanlagegut unterscheidet,
wobei der Prozessor dazu konfiguriert ist, eine Vielzahl von Bedrohungsbewertungen für ein zweites Organisationsanlagegut (206) auf der Basis von 1) einer Beziehung (218) zwischen dem ersten Organisationsanlagegut und dem zweiten Organisationsanlagegut und 2) einer Angabe der Bedeutung (212) des ersten Organisationsanlageguts zu berechnen, wobei die Vielzahl von Bedrohungsbewertungen für das zweite Organisationsanlagegut eine Bedrohungsquellenbewertung und eine Bedrohungszielbewertung für das zweite Organisationsanlagegut beinhaltet,
wobei der Prozessor dazu konfiguriert ist, eine Bedrohungsminderung für das erste Organisationsanlagegut durchzuführen, wenn eine Bedrohungsbewertung von der Vielzahl von Bedrohungsbewertungen für das erste Organisationsanlagegut einen vorherbestimmten Grenzwert überschreitet, wobei der Prozessor dazu konfiguriert ist, eine Bedrohungsminderung für das zweite Organisationsanlagegut durchzuführen, wenn eine Bedrohungsbewertung von der Vielzahl von Bedrohungsbewertungen für das zweite Organisationsanlagegut den vorherbestimmten Grenzwert überschreitet.

2. Vorrichtung nach Anspruch 1, wobei der Prozessor weiterhin konfiguriert ist zum:
Erzeugen einer Bedrohungseinflussdatenstruktur auf der Basis der Informationen zu den anlagegutagnostischen Bedrohungsinformationen und
Assoziieren der Bedrohungseinflussdatenstruktur mit dem ersten Organisationsanlagegut.

3. Vorrichtung nach Anspruch 1, wobei die Vielzahl von Bedrohungsbewertungen des ersten Organisationsanlageguts berechnet wird, bevor eine Bedrohung an dem ersten Organisationsanlagegut erkannt wurde.

4. Vorrichtung nach Anspruch 1, wobei die Bedrohungsbewertung von der Vielzahl von Bedrohungsbewertungen des ersten Organisationsanlageguts den vorherbestimmten Grenzwert überschreitet, wenn die Angabe der Bedeutung des ersten Organisationsanlageguts den vorherbestimmten Grenzwert überschreitet.

5. Vorrichtung nach Anspruch 1, wobei die Vielzahl von Bedrohungsbewertungen des ersten Organisationsanlageguts weiterhin auf der Basis von mindestens einer der folgenden berechnet wird: einer Angabe einer versuchten Verbindung mit dem ersten Organisationsanlagegut durch ein nicht zugelassenes Anlagegut und einer Angabe einer versuchten Verbindung mit dem zweiten Organisationsanlagegut durch ein nicht zugelassenes Anlagegut.

6. Vorrichtung nach Anspruch 1, wobei:
die anlagegutagnostischen Bedrohungsinformationen eine Angabe eines vorgesehenen Ziels eines Bedrohungsrisikos beinhalten und
die Vielzahl von Bedrohungsbewertungen des ersten Organisationsanlageguts weiterhin auf der Basis einer Angabe eines Ursprungs des Bedrohungsrisikos berechnet wird.

7. Vorrichtung nach Anspruch 1, wobei:
das erste Organisationsanlagegut und das zweite Organisationsanlagegut Teil einer Vielzahl von Organisationsanlagegütern sind,
die erste Vielzahl von Bedrohungsbewertungen, die zweite Vielzahl von Bedrohungsbewertungen und Bedrohungsbewertungen, die mit jedem verbleibenden Organisationsanlagegut von der Vielzahl von Organisationsanlagegütern assoziiert sind, in einer grafischen Benutzeroberfläche angezeigt werden, um eine grafische Darstellung eines Gesamtbedrohungsrisikos einer Organisation auf der Basis der Bedrohungsbewertungen, die mit jedem Organisationsanlagegut von der Vielzahl von Organisationsanlagegütern assoziiert sind, zu rendern,
eine Auswahl einer grafischen Darstellung des ersten Organisationsanlageguts bewirkt, dass die grafische Benutzeroberfläche 1) die erste Vielzahl von Bedrohungsbewertungen, 2) eine dritte Vielzahl von Bedrohungsbewertungen, die auf der Basis einer Angabe berechnet werden, dass ein drittes Organisationsanlagegut, das zu dem ersten Organisationsanlagegut zugehörig ist, ein Ursprung eines Bedrohungsrisikos ist, und 3) eine Anlagegutgefährdungseinflussbewertung, ACI-Bewertung, die die Angabe einer Bedeutung des ersten Organisationsanlageguts darstellt, rendert, und
die grafische Benutzeroberfläche dazu konfiguriert ist, eine Anforderung zum Durchführen einer Bedrohungsminderungsaktion als Reaktion auf ein Rendern der ersten Vielzahl von Bedrohungsbewertungen, der dritten Vielzahl von Bedrohungsbewertungen und der ACI-Bewertung zu empfangen.

8. Vorrichtung nach Anspruch 1, wobei der Prozessor weiterhin konfiguriert ist zum:
Assoziieren der anlagegutagnostischen Bedrohungsinformationen mit einem von dem ersten Organisationsanlagegut oder dem zweiten Organisationsanlagegut,
Empfangen einer Anlagegutgefährdungseinflussbewertung, ACI-Bewertung, von einem Netzwerkadministrator, der mit einem von dem ersten Organisationsanlagegut oder dem zweiten Organisationsanlagegut, einer von der Bedeutung des ersten Organisationsanlageguts oder einer Bedeutung des zweiten Organisationsanlageguts, die die ACI-Bewertung umfasst, assoziiert ist,
Berechnen eines Einflusses des einen von dem ersten Organisationsanlagegut oder dem zweiten Organisationsanlagegut auf jedes verbleibende Organisationsanlagegut von einer Vielzahl von Organisationsanlagegütern,
Berechnen einer von der Vielzahl von Bedrohungsbewertungen für das erste Organisationsanlagegut oder der Vielzahl von Bedrohungsbewertungen für das zweite Organisationsanlagegut auf der Basis der anlagegutagnostischen Bedrohungsinformationen und der ACI-Bewertung,
Berechnen von Bedrohungsbewertungen für jedes verbleibende Organisationsanlagegut von der Vielzahl von Organisationsanlagegütern auf der Basis von 1) der Vielzahl von Bedrohungsbewertungen für eines von dem ersten Organisationanlagegut oder dem zweiten Organisationsanlagegut und 2) auf der Basis des Einflusses des einen von dem ersten Organisationsanlagegut oder dem zweiten Organisationsanlagegut und
Durchführen einer Bedrohungsminderung für jedes verbleibende Organisationsanlagegut von der Vielzahl von Organisationsanlagegütern, wenn die Bedrohungsbewertung davon den vorherbestimmten Grenzwert überschreitet.

9. Vorrichtung nach Anspruch 8, wobei der Prozessor weiterhin konfiguriert ist zum:
Erzeugen einer Bedrohungseinflussdatenstruktur auf der Basis der Angabe der anlagegutagnostischen Bedrohungsinformationen und
Assoziieren der Bedrohungseinflussdatenstruktur mit dem einen von dem ersten Organisationsanlagegut oder dem zweiten Organisationsanlagegut.

10. Vorrichtung nach Anspruch 8, wobei die Vielzahl von Bedrohungsbewertungen für das eine von dem ersten Organisationsanlagegut oder dem zweiten Organisationsanlagegut berechnet wird, bevor bestimmt wird, dass das eine von dem ersten Organisationsanlagegut oder dem zweiten Organisationsanlagegut die anlagegutagnostischen Bedrohungsinformationen beinhaltet.

11. Vorrichtung nach Anspruch 8, wobei die Vielzahl von Bedrohungsbewertungen für das eine von dem ersten Organisationsanlagegut oder dem zweiten Organisationsanlagegut weiterhin auf der Basis einer Beziehungsgefährdungseinflussbewertung, RCI-Bewertung, die auf der Basis der ACI-Bewertung des einen von dem ersten Organisationsanlagegut oder dem zweiten Organisationsanlagegut berechnet wird, und einer ACI-Bewertung jedes verbleibenden Organisationsanlageguts von der Vielzahl von Organisationsanlagegütern, die mit dem einen von dem ersten Organisationsanlagegut oder dem zweiten Organisationsanlagegut assoziiert sind, berechnet wird.

12. Verfahren, umfassend:
Empfangen von Informationen zu anlagegutagnostischen Bedrohungsinformationen (202) an einem Prozessor (104) und von einer Quelle (102);
Empfangen einer Angabe einer Bedeutung (212) eines ersten organisatorischen Anlageguts (204) an dem Prozessor;
Berechnen einer Vielzahl von Bedrohungsbewertungen für das erste organisatorische Anlagegut im Wesentlichen parallel und mittels des Prozessors auf der Basis von 1) den Informationen zu den anlagegutagnostischen Bedrohungsinformationen und 2) der Angabe der Bedeutung des ersten organisatorischen Anlageguts, wobei die Vielzahl von Bedrohungsbewertungen für das erste Organisationsanlagegut 1) eine Bedrohungsquellenbewertung (208) und 2) eine Bedrohungszielbewertung (210) beinhaltet, wobei die Bedrohungsquellenbewertung eine Wahrscheinlichkeit darstellt, dass das erste Organisationsanlagegut eine Quelle einer Bedrohung sein wird, wobei die Bedrohungszielbewertung eine Wahrscheinlichkeit darstellt, dass das erste Organisationsanlagegut ein Ziel einer Bedrohung sein wird, wobei die Bedrohungszielbewertung für das erste Organisationsanlagegut sich von der Bedrohungsquellenbewertung für das erste Organisationsanlagegut unterscheidet;
Berechnen einer Vielzahl von Bedrohungsbewertungen eines zweiten organisatorischen Anlageguts (206), das mit dem ersten organisatorischen Anlagegut assoziiert ist, mittels des Prozessors auf der Basis von 1) einer Beziehung (218) zwischen dem ersten organisatorischen Anlagegut und dem zweiten organisatorischen Anlagegut und 2) der Angabe der Bedeutung des ersten organisatorischen Anlageguts, wobei die Vielzahl von Bedrohungsbewertungen für das zweite Organisationsanlagegut eine Bedrohungsquellenbewertung und eine Bedrohungszielbewertung für das zweite Organisationsanlagegut beinhaltet;
Durchführen einer Bedrohungsminderung für das erste organisatorische Anlagegut mittels des Prozessors, wenn eine Bedrohungsbewertung von der Vielzahl von Bedrohungsbewertungen für das erste organisatorische Anlagegut einen vorherbestimmten Grenzwert überschreitet; und
Durchführen einer Bedrohungsminderung für das zweite organisatorische Anlagegut mittels des Prozessors, wenn eine Bedrohungsbewertung von der Vielzahl von Bedrohungsbewertungen für das zweite organisatorische Anlagegut den vorherbestimmten Grenzwert überschreitet.

13. Verfahren nach Anspruch 12, wobei die Angabe der Bedeutung des ersten organisatorischen Anlageguts eine Anlagegutgefährdungseinflussbewertung, ACI-Bewertung, ist, die von einem Netzwerkadministrator konfiguriert wird.

14. Verfahren nach Anspruch 12, wobei das erste organisatorische Anlagegut ein Netzwerkanlagegut ist, wobei das Netzwerkanlagegut eine bzw. einer von einer Internetprotokoll-Adresse, IP-Adresse, einer Netzwerkvorrichtung, einer klassenlosen Interdomänenrouting-Kennung, CIDR-Kennung, einer Netzwerkvorrichtung, einer autonomen Systemnummer, ASN, einer Vielzahl von Netzwerkvorrichtungen, einem voll qualifizierten Domänennamen, FQDN, einer Netzwerkvorrichtung, einer Netzwerkanwendung, die auf einer Netzwerkvorrichtung instanziiert ist, einer Kennung eines Netzwerkbenutzers, der mit einer Netzwerkvorrichtung assoziiert ist, oder einer Hardwarekennung einer Netzwerkvorrichtung ist.

15. Verfahren nach Anspruch 12, wobei die Vielzahl von Bedrohungsbewertungen des zweiten organisatorischen Anlageguts weiterhin auf der Basis einer Beziehungsgefährdungseinflussbewertung, RCI-Bewertung, berechnet wird, die auf der Basis einer Assoziation zwischen dem ersten organisatorischen Anlagegut und dem zweiten organisatorischen Anlagegut und auf der Basis der Angabe der Bedeutung des ersten organisatorischen Anlageguts berechnet wird.

## Revendications

1. Appareil (100), comportant :
une mémoire (106) ; et
un processeur (104) accouplé fonctionnellement à la mémoire,
le processeur étant configuré pour recevoir des informations portant sur des informations de menace ne se rapportant pas à une ressource (202) en provenance d'une source (102),
le processeur étant configuré pour calculer, de manière sensiblement parallèle, chaque indice de menace en provenance d'une pluralité d'indices de menace pour une première ressource d'organisation (204) en se basant sur les informations portant sur les informations de menace ne se rapportant pas à une ressource, la pluralité d'indices de menace pour la première ressource d'organisation comprenant 1) un indice de source de menace (208) et 2) un indice de destination de menace (210), l'indice de source de menace représentant une probabilité comme quoi la première ressource d'organisation sera une source d'une menace, l'indice de destination de menace représentant une probabilité comme quoi la première ressource d'organisation sera une destination d'une menace, l'indice de destination de menace pour la première ressource d'organisation étant différent de l'indice de source de menace pour la première ressource d'organisation,
le processeur étant configuré pour calculer une pluralité d'indices de menace pour une deuxième ressource d'organisation (206) en se basant sur 1) une relation (218) entre la première ressource d'organisation et la deuxième ressource d'organisation, et 2) une indication de l'importance (212) de la première ressource d'organisation, la pluralité d'indices de menace pour la deuxième ressource d'organisation comprenant un indice de source de menace et un indice de destination de menace pour la deuxième ressource d'organisation,
le processeur étant configuré pour effectuer une atténuation de menace pour la première ressource d'organisation quand un indice de menace en provenance de la pluralité d'indices de menace pour la première ressource d'organisation dépasse un seuil prédéterminé, le processeur étant configuré pour effectuer une atténuation de menace pour la deuxième ressource d'organisation quand un indice de menace en provenance de la pluralité d'indices de menace pour la deuxième ressource d'organisation dépasse le seuil prédéterminé.

2. Appareil selon la revendication 1, dans lequel le processeur est par ailleurs configuré pour :
générer une structure de données d'impact de menace en se basant sur les informations portant sur les informations de menace ne se rapportant pas à une ressource, et
associer la structure de données d'impact de menace à la première ressource d'organisation.

3. Appareil selon la revendication 1, dans lequel la pluralité d'indices de menace de la première ressource d'organisation est calculée avant qu'une menace n'ait été détectée au niveau de la première ressource d'organisation.

4. Appareil selon la revendication 1, dans lequel l'indice de menace en provenance de la pluralité d'indices de menace de la première ressource d'organisation dépasse le seuil prédéterminé quand l'indication de l'importance de la première ressource d'organisation dépasse le seuil prédéterminé.

5. Appareil selon la revendication 1, dans lequel la pluralité d'indices de menace de la première ressource d'organisation est par ailleurs calculée en se basant sur au moins l'une parmi : une indication d'une tentative de connexion à la première ressource d'organisation par une ressource non approuvée ; et une indication d'une tentative de connexion à la deuxième ressource d'organisation par une ressource non approuvée.

6. Appareil selon la revendication 1, dans lequel :
les informations de menace ne se rapportant pas à une ressource comprennent une indication d'une cible prévue d'un risque de menace ; et
la pluralité d'indices de menace de la première ressource d'organisation est par ailleurs calculée en se basant sur une indication d'une origine du risque de menace.

7. Appareil selon la revendication 1, dans lequel :
la première ressource d'organisation et la deuxième ressource d'organisation font partie d'une pluralité de ressources d'organisation,
la première pluralité d'indices de menace, la deuxième pluralité d'indices de menace, et des indices de menace associés à chaque ressource d'organisation restante en provenance de la pluralité de ressources d'organisation sont affichés dans une interface utilisateur graphique de manière à présenter une représentation graphique d'un risque de menace d'ensemble d'une organisation en se basant sur les indices de menace associés à chaque ressource d'organisation en provenance de la pluralité de ressources d'organisation,
la sélection d'une représentation graphique de la première ressource d'organisation amène l'interface utilisateur graphique à présenter 1) la première pluralité d'indices de menace, 2) une troisième pluralité d'indices de menace calculée en se basant sur une indication comme quoi une troisième ressource d'organisation se rapportant à la première ressource d'organisation est une origine d'un risque de menace, et 3) un indice ACI (asset compromise impact - impact de compromis de ressource) représentant l'indication d'une importance de la première ressource d'organisation, et
l'interface utilisateur graphique est configurée pour recevoir une demande pour effectuer une action d'atténuation de menace en réponse à la présentation de la première pluralité d'indices de menace, de la troisième pluralité d'indices de menace, et de l'indice ACI.

8. Appareil selon la revendication 1, le processeur étant par ailleurs configuré pour :
associer les informations de menace ne se rapportant pas à une ressource à l'une parmi la première ressource d'organisation ou la deuxième ressource d'organisation,
recevoir un indice ACI (asset compromise impact - impact de compromis de ressource) en provenance d'un administrateur de réseau associé à l'une parmi la première ressource d'organisation ou la deuxième ressource d'organisation, l'une parmi l'importance de la première ressource d'organisation ou une importance de la deuxième ressource d'organisation comportant l'indice ACI,
calculer un impact de l'une parmi la première ressource d'organisation ou la deuxième ressource d'organisation sur chaque ressource d'organisation restante en provenance d'une pluralité de ressources d'organisation,
calculer l'une parmi la pluralité d'indices de menace pour la première ressource d'organisation ou la pluralité d'indices de menace pour la deuxième ressource d'organisation en se basant sur les informations de menace ne se rapportant pas à une ressource et sur l'indice ACI,
calculer des indices de menace pour chaque ressource d'organisation restante en provenance de la pluralité de ressources d'organisation en se basant sur 1) la pluralité d'indices de menace pour l'une parmi la première ressource d'organisation ou la deuxième ressource d'organisation et 2) en se basant sur l'impact de l'une parmi la première ressource d'organisation ou la deuxième ressource d'organisation, et
effectuer une atténuation de menace pour chaque ressource d'organisation restante en provenance de la pluralité de ressources d'organisation quand l'indice de menace de celui-ci dépasse le seuil prédéterminé.

9. Appareil selon la revendication 8, le processeur étant par ailleurs configuré pour :
générer une structure de données d'impact de menace en se basant sur l'indication des informations de menace ne se rapportant pas à une ressource, et
associer la structure de données d'impact de menace à l'une parmi la première ressource d'organisation ou la deuxième ressource d'organisation.

10. Appareil selon la revendication 8, dans lequel la pluralité d'indices de menace pour ladite l'une parmi la première ressource d'organisation ou la deuxième ressource d'organisation est calculée avant de déterminer que ladite l'une parmi la première ressource d'organisation ou la deuxième ressource d'organisation comprend les informations de menace ne se rapportant pas à une ressource.

11. Appareil selon la revendication 8, dans lequel la pluralité d'indices de menace pour ladite l'une parmi la première ressource d'organisation ou la deuxième ressource d'organisation est par ailleurs calculée en se basant sur un indice RCI (relational compromise impact - impact de compromis de relation) calculé en se basant sur l'indice ACI de ladite l'une parmi la première ressource d'organisation ou la deuxième ressource d'organisation, et un indice ACI de chaque ressource d'organisation restante en provenance de la pluralité de ressources d'organisation associées à l'une parmi la première ressource d'organisation ou la deuxième ressource d'organisation.

12. Procédé, comportant les étapes consistant à :
recevoir, au niveau d'un processeur (104) et en provenance d'une source (102), des informations portant sur des informations de menace ne se rapportant pas à une ressource (202) ;
recevoir, au niveau du processeur, une indication d'une importance (212) d'une première ressource organisationnelle (204) ;
calculer, de manière sensiblement parallèle et par le biais du processeur, une pluralité d'indices de menace pour la première ressource organisationnelle en se basant sur 1) les informations portant sur les informations de menace ne se rapportant pas à une ressource, et 2) l'indication de l'importance de la première ressource organisationnelle, la pluralité d'indices de menace pour la première ressource d'organisation comprenant 1) un indice de source de menace (208) et 2) un indice de destination de menace (210), l'indice de source de menace représentant une probabilité comme quoi la première ressource d'organisation sera une source d'une menace, l'indice de destination de menace représentant une probabilité comme quoi la première ressource d'organisation sera une destination d'une menace, l'indice de destination de menace pour la première ressource d'organisation étant différent de l'indice de source de menace pour la première ressource d'organisation ;
calculer, par le biais du processeur, une pluralité d'indices de menace d'une deuxième ressource organisationnelle (206) associée à la première ressource organisationnelle, en se basant sur 1) une relation (218) entre la première ressource organisationnelle et la deuxième ressource organisationnelle, et 2) l'indication de l'importance de la première ressource organisationnelle, la pluralité d'indices de menace pour la deuxième ressource d'organisation comprenant un indice de source de menace et un indice de destination de menace pour la deuxième ressource d'organisation ;
effectuer, par le biais du processeur, une atténuation de menace pour la première ressource organisationnelle quand un indice de menace en provenance de la pluralité d'indices de menace pour la première ressource organisationnelle dépasse un seuil prédéterminé ; et
effectuer, par le biais du processeur, une atténuation de menace pour la deuxième ressource organisationnelle quand un indice de menace en provenance de la pluralité d'indices de menace pour la deuxième ressource organisationnelle dépasse le seuil prédéterminé.

13. Procédé selon la revendication 12, dans lequel l'indication de l'importance de la première ressource organisationnelle est un indice ACI (asset compromise impact - impact de compromis de ressource) configuré par un administrateur de réseau.

14. Procédé selon la revendication 12, dans lequel la première ressource organisationnelle est une ressource de réseau, la ressource de réseau étant l'un parmi un adresse IP (internet protocol - protocole Internet) d'un dispositif de réseau, un identifiant CIDR (classless inter-domain routing - routage interdomaine sans classes) d'un dispositif de réseau, un ASN (autonomous system number - numéro de système autonome) d'une pluralité de dispositifs de réseau, un FQDN (fully qualified domain name - nom de domaine complet) d'un dispositif de réseau, une application de réseau instanciée sur un dispositif de réseau, un identifiant d'un utilisateur de réseau associé à un dispositif de réseau, ou un identifiant de matériel d'un dispositif de réseau.

15. Procédé selon la revendication 12, dans lequel la pluralité d'indices de menace de la deuxième ressource organisationnelle est par ailleurs calculée en se basant sur un indice RCI (relational compromise impact - impact de compromis de relation) calculé en se basant sur une association entre la première ressource organisationnelle et la deuxième ressource organisationnelle et en se basant sur l'indication de l'importance de la première ressource organisationnelle.
